# EUROPEAN PATENT SPECIFICATION

(11) **EP 2 958 293 B1**
(45) Date of publication and mention of the grant of the patent: **27.11.2019**
(21) Application number: 14189318.0
(22) Date of filing: 17.10.2014
(51) Int. Cl.: H04L 29/06

(54) **IMS-based IPTV Services with WebRTC**
IMS-basierte IPTV-Dienste mit WebRTC
Services IPTV basés sur IMS avec WebRTC

(30) Priority: 17.06.2014 EP 14172674
(43) Date of publication of application: 23.12.2015
(73) Proprietor: Deutsche Telekom AG, 53113 Bonn (DE)
(72) Inventor: Baumgart, Matthias, 18147 Rostock (DE); Maruschke, Michael, 04275 Leipzig (DE); Hänsge, Kay, 10785 Berlin (DE); Bach, Tillmann, 10779 Berlin (DE); Zimmermann, Jens, 64372 Ober-Ramstadt (DE)
(74) Representative: Vossius & Partner Patentanwälte Rechtsanwälte mbB

(56) References cited:
- Tilmann Bach ET AL: "Combination of IMS-based IPTV Services with WebRTC", , 30 June 2014 (2014-06-30), XP055175228, Retrieved from the Internet: URL:http://www.researchgate.net/profile/Ka y_Haensge/publication/272476814_Combinatio n_of_IMS-based_IPTV_Services_with_WebRTC/l inks/54e4a34f0cf276cec171d1ac.pdf?origin=p ublication_detail [retrieved on 2015-03-10]
- "3rd Generation Partnership Project; Technical Specification Group Services and System Aspects; Study on Security for WebRTC IMS Client access to IMS (Release 12)", 3GPP STANDARD; 3GPP TR 33.871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V1.0.0, 16 June 2014 (2014-06-16), pages 1-46, XP050774044, [retrieved on 2014-06-16]
- MIKOCZY E ET AL: "IMS based IPTV services - Architecture and Implementation", MOBIMEDIA - PROCEEDINGS OF THE 3RD INTERNATIONAL CONFERENCE ON MOBILE MULTIMEDIA COMMUNICATIONS; [ACM INTERNATIONAL CONFERENCE PROCEEDING SERIES], ICST (INSTITUTE FOR COMPUTER SCIENCES, SOCIAL-INFORMATICS AND TELECOMMUNICATIONS ENGINEERING) ICST, BRU, 1 August 2007 (2007-08-01), pages 1-7, XP007908230, ISBN: 978-963-06-2670-5
- ED O'LEARY ET AL: "WebRTC Overview", 3GPP DRAFT; WEBRTC OVERVIEW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Chicago; 20130416 - 20130418 9 April 2013 (2013-04-09), XP050710073, Retrieved from the Internet: URL:http://www.3gpp.org/ftp/tsg_sa/WG3_Sec urity/TSGS3_LI/2013_49_Chicago/ [retrieved on 2013-04-09]

## Description

The present invention relates to a system and a method utilizing IMS based IPTV services with WebRTC enabled devices. More specifically, the present invention relates to a system and a method for enabling a WebRTC enabled Client to connect to an IMS based IPTV network architecture.

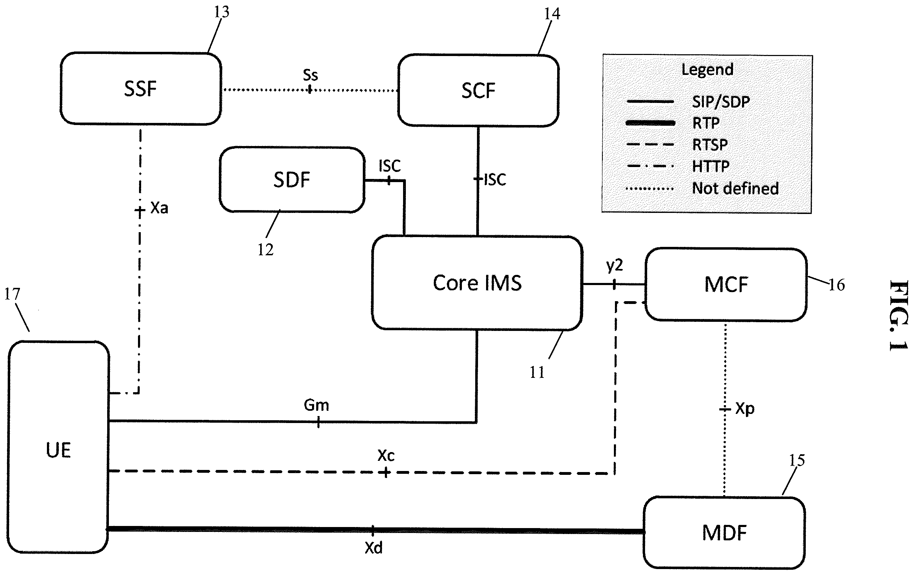

IP Multimedia Subsystem (IMS)-based IP Television (IPTV) Services have been standardized by the European Telecommunications Standards Institute (ETSI) Telecommunications and Internet converged Services and Protocols for Advanced Networking (TISPAN) working group finalizing this work in 2011. The ETSI specification TS 182027 (v3.5.1) gives an overview about the IPTV services and features supported by an IMS-based IPTV subsystem and their corresponding architecture. The most common services and features described are Broadcast TV, Time Shifted TV, Content on Demand (CoD), Network-Personal Video Recorder (N-PVR), Pay-Per-View (PPV), electronic program guide (EPG), parental control and advertising. The ETSI specification TS 183063 (v3.5.5) presents the IPTV communication procedures more in detail using several control protocols (Session Initiation Protocol/Session Description Protocol (SIP/SDP), Real-Time Streaming Protocol (RTSP), Hypertext Transfer Protocol (HTTP) or Real-Time Transport Protocol (RTP)). The IMS-based IPTV architecture reuses the IMS core network subsystem (described in 3GPP TS 23.002 V12.4.0) enhanced by a set of IPTV typically functions like IPTV service discovery, service selection, service control, media control and delivery functions with extensions on the User Equipment (UE) side that includes an IMS UA (User Agent) which is interacting as an IMS-based IPTV end device. Therefore, the UE enables all those IPTV typical functions for media receiving and media playing. The standardized architecture of an IMS based IPTV service is depicted in **Fig. 1** and is described as follows:
- *Core IMS* 11 includes the core network components as specified in 3GPP TS 23.002 V12.4.0.
- *Service Discovery Function (SDF)* 12 provides Service Attachment Information (SAI) with information about available services and related Service Selection Function (SSF).
- *Service Selection Function (SSF)* 13 provides Service Selection Information (SSI) containing the metadata of the available content.
- *Service Control Function (SCF)* 14 is a Service Initiation Protocol (SIP) Application Server (AS) and the reference point for IMS UEs to start and control the IPTV sessions, moreover the SCF 14 assigns the corresponding Media Control Function (MCF) and forwards the session information to it.
- *Media Control Function (MCF)* 16 controls media transport of Media Delivery Function (MDF) and receives instructions of SCF 14 and UE.
- *Media Delivery Function (MDF)* 15 contains media data and transmits them to the UE.
- *User Equipment (UE)* 17 interacts as IMS based IPTV end user.

To realize IMS based IPTV, ETSI specification TS 182027 (v3.5.1) defines Generic IPTV Capabilities, a set of typically general signaling functions like service discovery and service control. All corresponding interfaces and used protocols are described more detailed in Section 4 of ETSI specification TS 183063 (v3.5.5).

New web technologies like Hypertext Markup Language Version 5 (HTML5), WebSockets, etc., offer an easy and timely development of new web applications. The new upcoming framework named WebRTC enriches ordinary web browsers with real-time communication functions offering High-Definition (HD) audio and video exchange bi-directionally, without any further installation of plugins or applications.

WebRTC is an open project initiated by Google Incorporated and is still in the standardization process. The World Wide Web Consortium (W3C) is responsible for the web developer Application Programming Interface (API) and the Internet Engineering Task Force (IETF) for all corresponding protocols in an active working group named "Real-Time Communication in WEB-browsers - RTCweb" (IETF. Rtcweb status pages. http://tools.ietf.org/wg/rtcweb/, [retrieved: Jan., 2013]). First relevant standard documents are the W3C working draft "WebRTC 1.0: Real-time communication between browsers" (C. Jennings, A. Narayanan, D. Burnett, and A. Bergkvist, "WebRTC 1.0: Real-time communication between browsers," W3C, W3C Working Draft, Sep. 2013, http://www.w3.org/TR/2013/WD-webrtc-20130910/, [retrieved: Dec., 2013]) from September 2013 and also the IETF draft "Web Real-Time Communication Use-cases and Requirements" (C. Holmberg, S. Hakansson, G. Eriksson, "Web Real-Time Communication Use-cases and Requirements", http://tools.ietf.org/html/draft-ietf-rtcweb-use-cases-and-requirements-14, [retrieved: May., 2014]) from February 2014.

The extension of the web browsers enables developers to easily implement voice and video call web applications accessible via the specified API inside the web browser.

WebRTC does not define any particular signaling protocol. That is why developers can choose the most appropriate protocol for their special use case. So it is possible to implement new communication features, faster.

WebRTC requires secure transport of the RTP packets with the Secure Real-Time Transport Protocol (SRTP) based on the necessity to implement Datagram Transport Layer Security (DTLS) encryption protocol used for key negotiation. For solving Network Address Translation (NAT) problems, WebRTC also provides Session Traversal Utilities for NAT (STUN), Traversal Using Relays around NAT (TURN) and Interactive Connectivity Establishment (ICE) capabilities. WebRTC uses the Session Description Protocol (SDP) for the negotiation of the session properties and uses the whole SDP's Offer/Answer Model. Furthermore, SDP is also used for exchanging the fingerprint of the certificate used in the DTLS Certificate exchange procedure and ICE specific parameters like the ICE Candidate objects.

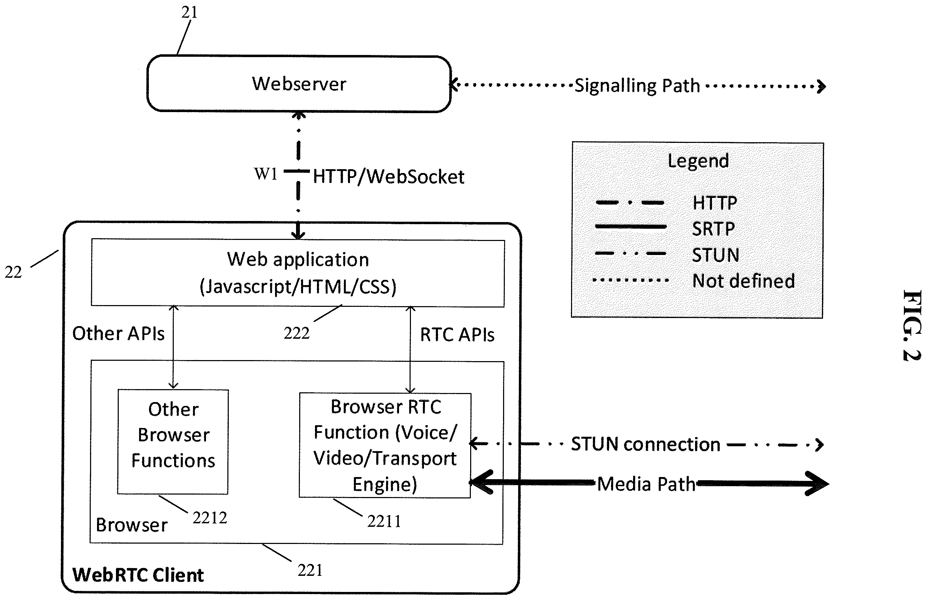

The generic architecture of a WebRTC Client 22 with its components and interfaces is described in **Fig. 2** based on H. Alvestrand, "Overview: Real Time Protocols for Brower-based Applications draft-ietf-rtcweb-overview-08", http://tools.ietf.org/id/draftietf-rtcweb-overview-08.txt, [retrieved: Jan., 2014]. The basic components in Fig. 2 can be described as follows:
- *Webserver* 21 provides the web application to load and includes a server for the client 22 to connect to for handling the whole signaling flow.
- *Browser* 221 is a generic web browser which is capable of the WebRTC features.
- *Web application* 222 is the application source code executed by the web browser. The Web application 222 makes use of the built in WebRTC functions of the browser via the RTC APIs. The web application further makes use of other browser functions 2212 via other APIs.

- *Browser RTC Function* 2211 is the WebRTC component inside the web browser providing voice, video and transport engines.
- *Signaling Path* is the connection that is used to transport the signaling SDP information..
- *Media Path* is the connection that is used to transport the payload. It provides secure encrypted connection between the endpoints by using SRTP.
- *STUN Connection* is a mandatory component to connect to a STUN server in order to bypass NAT restrictions.

For running a WebRTC client successfully, a capable web browser may conveniently be used. That means the browser has to implement the Browser RTC Function. Currently, web browsers like Google Chrome, Mozilla Firefox and Opera provide this component by default.

Neither the above-mentioned W3C draft nor the IETF "RTCweb" standardisation working group is dealing with the combination of WebRTC and IMS-based IPTV services. The Annex of 3GPP TS 23.228 V12.4.0 (2014-03) specifies a network-based architecture for the support of WebRTC client's access to IMS network. However, this specification focuses on conversational real-time communication services like audio or video telephony but not on the interconnection of WebRTC with IMS-based IPTV services.

Eugen Mikoczy et al; "IMS based IPTV services - Architecture and Implementation", XP7908230, describes an architecture for converged IPTV services. "3rd Generation Partnership Project; Technical Specification Group Services and System Aspects; Study on Security for WebRTC IMS Client access to IMS (Release 12)", 3GPP Standard; 3GPP TR 33.871, vol. SA WG3, no. V1.0.0, June 16, 2014 describes the goal of web RTC IMS client access to IMS to significantly expand the pool of clients able to access IMS.

The object of the present invention is to provide a system and a method for utilizing IMS-based IPTV services with WebRTC enabled devices. This object is achieved with the features of the independent claims. The dependent claims relate to further aspects of the invention.

According to one aspect of the invention a system as defined by claim 1 for enabling a Web Real Time Communication, WebRTC, enabled client to connect to an IP Multimedia Subsystem, IMS, based IP Television, IPTV, subsystem, the IMS based IPTV subsystem having an IMS core enhanced by IPTV functions is provided. The system comprises a signaling gateway, SGW, exchanging signaling information between the WebRTC enabled client, and the IMS based IPTV subsystem and a Media Delivery Function, MDF, module (50) containing media data and transmitting IPTV content to the WebRTC enabled client over a secure channel.

Both functionalities, SGW and MDF, maybe provided by a single device.

Furthermore, the IMS core of the IMS based IPTV subsystem includes core network components, the IMS based IPTV subsystem may further comprise a Service Selection Function, SSF, providing Service Selection Information, SSI, containing metadata of available content, a Service Discovery Function, SDF, providing Service Attachment Information, SAI, with information about available services and related SSF, a Service Control Function, SCF, being a Service Information Protocol, SIP, Application Server, AS, the reference point for the client to start and control the IPTV sessions, and assigns the corresponding MCF and forwards the session information to it, and a Media Control Function, MCF, controlling media transport of the MDF and receives instructions of SCF and the client.

The Signaling Gateway might further comprise a Signaling Gateway Control Engine for controlling different signaling protocol handlers and assigning signaling messages to the adequate signaling protocol handler, a WebRTC Client Signaling Handler for maintaining a signaling connection between the Signaling Gateway and the WebRTC client, a HTTP Handler for signaling connection between the Signaling Gateway and the Service Selection Function, a SIP Handler for signaling connection between the Signaling Gateway and the IMS Core, and a RTSP Handler for signaling connection between the Signaling Gateway and the MCF.

In addition, the Media Delivery Function might comprise a MDF control engine for dispatching signaling from the MCF towards the internal MDF functions and vice versa, a Streaming engine for providing the streaming server and the DTLS/SRTP support, and an Interactive Connectivity Establishment, ICE, Agent supporting ICE methods.

In one aspect of the present invention a WebRTC enabled browser may be used as client device. In another aspect of the present invention a WebRTC App browser is used as client device.

In another aspect of the present invention a method for enabling a Web Real Time Communication, WebRTC, enabled client to connect to an IP Multimedia Subsystem, IMS, based IP Television, IPTV, subsystem, the IMS based IPTV subsystem having an IMS core enhanced by IPTV functions is provided, preferably using the apparatus as outlined above. The method comprising the steps of exchanging signaling information between the WebRTC enabled client, and the IMS based IPTV subsystem via a signaling gateway, SGW and transmitting IPTV content to the WebRTC enabled client (22) over a secure channel using a Media Delivery Function, MDF, module (50) containing media data.

According to the present invention IMS-based IPTV services are combined with a future-oriented web browser technology, the WebRTC. The invention reuses the standardized IMS-based IPTV architecture as well as a state of the art WebRTC enabled browser Client, which acts as a functional entity (IPTV UE) that provides the user with access to IPTV services (e.g. Video/Audio on Demand; Linear/Broadcast TV). It is important to mention that the current invention is however not limited to the current Browsers mentioned above. All devices which support WebRTC services in a browser or a dedicated software are able to be used as client devices for the proposed invention.

The invention introduces a signaling gateway and a modification in the Media Delivery Function (MDF) that enables a WebRTC Client to connect to an IMS-based IPTV core. This offers multiple benefits:
a) Any WebRTC capable client (like a current state of the art Google Chrome™ web browser) can be used without any further adjustments to connect and utilize IMS-based IPTV services. A separate media receiver and media player is therefore obsolete.
b) WebRTC is offering a very good audio/video quality by the built-in audio and video codecs. Reusing this results also in a very good audio and video experience for IMS-based IPTV services.
c) The current invention does not need real-time transcoding of multimedia data. Hence, a decrease of media quality is avoided.
d) WebRTC includes confidentiality for the delivered on demand multimedia data (e.g. Video/Music-on-Demand).

The present invention is described in more detail in the following with reference to the Figures, wherein:
**Fig. 1** is showing the simplified and standardized of IMS-based IPTV functional architecture, based on ETSI specification TS 183063 (v3.5.5).
**Fig. 2** is illustrating the basic components of a typical WebRTC Client and its connections to other network components, based on H. Alvestrand, "Overview: Real Time Protocols for Brower-based Applications draft-ietf-rtcweb-overview-08", http://tools.ietf.org/id/draftietf-rtcweb-overview-08.txt, [retrieved: Jan., 2014].
**Fig. 3** shows the proposed architecture of the invention including the signaling gateway and the modified MDF.
**Fig. 4** illustrates the internal components and connections of the proposed signaling gateway of the invention.
**Fig. 5** illustrates the internal components and connections of the proposed modified MDF component.
**Fig. 6** shows a sequence chart of the example use case, which is described in the description.

With the help of the Browser RTC Function the Web Browser (WebRTC) is able to handle RTP packets without the need of any separate software or plug-in. However, due to differences in the used media codecs and payload transport protocols the technical parameters of WebRTC and IMS based IPTV do not match out of-the-box. This invention covers the consolidation of the IMS-based IPTV architecture with WebRTC Clients. To fulfill all relevant IPTV services functions, a new Signaling Gateway (SGW) and a modified and extended MDF are added in the network architecture.

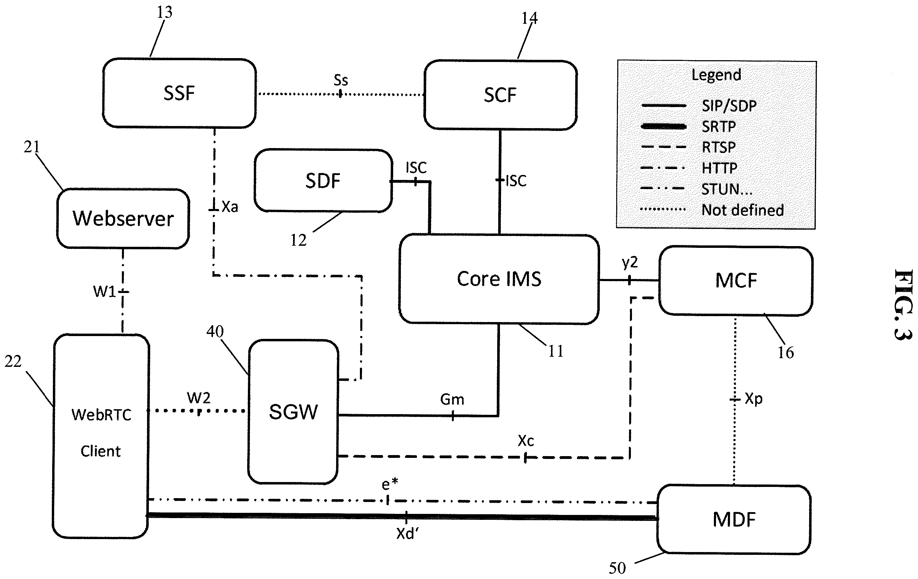

**Fig. 3** depicts the consolidated architecture according to an embodiment of the present invention. This proposed architecture is based on the simplified IMS-based IPTV functional architecture. Instead of an IMS IPTV UE 17, the endpoint of these IPTV services consists of a WebRTC Client 22. For the combination of both, a translation for the different signaling data and user data is necessary in various network components to gain compatibility.

The invention proposes and describes a new Signaling Gateway 40 to exchange signaling data between the WebRTC client 22 and the IMS-based IPTV core IMS network 11. The invention also proposes extensions of the component MDF 50. Unaffected components are the SDF 12, the SSF 13, the SCF 14, the MCF 16 and the Core IMS 11 network elements.

The new interface W2 (Fig. 3) is located between the WebRTC Client 22 and the SGW 40. WebRTC itself does not define any particular signaling protocol for this interface. Possible protocol options are SIP over WebSocket, REST based interface over WebSocket etc.

The new interface e* (Fig. 3) is located between the WebRTC Client 22 and the MDF 50. This interface is used for the STUN based ICE/UDP hole punching procedures to bypass NAT restrictions.

The modified interface Xd' (Fig. 3) is located between the WebRTC client 22 and the MDF 50. This interface is used for real-time content streaming between these entities supporting DTLS for secure media path connection (SRTP).

Unaffected interfaces are W1 (HTTP), Xa (HTTP), Ss (undefined), ISC (SIP), y2 (SIP), Gm (SIP), Xp (undefined) and Xc (RTSP). The interface W1 (HTTP) is located between the WebRTC Client 22 and the Webserver 21, which is typically used for downloading the WebRTC web application.

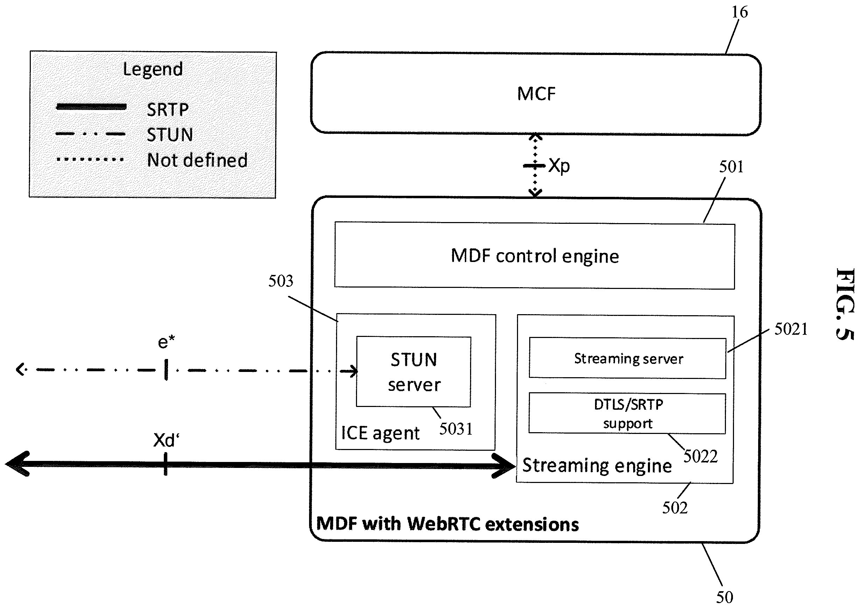

These changes and modifications made are described in detail in **Fig. 3** **and** **Fig. 5****.** The Webserver 21 is only needed for providing the WebRTC application sources which are fetched anew every time the end users' browser accesses the web application. The WebRTC application is executed in a WebRTC capable browser.

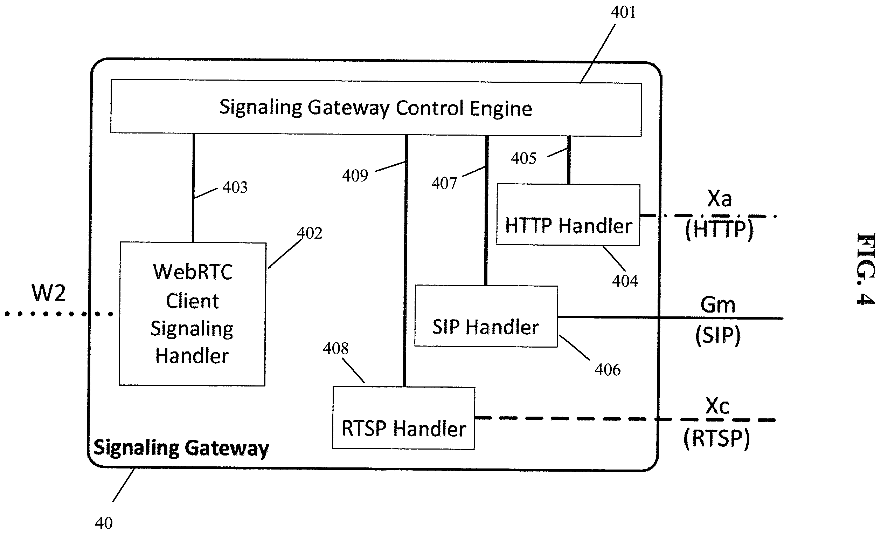

To make IMS-based IPTV services accessible to WebRTC clients typical Generic IPTV Capabilities (described in ETSI specification TS 182027 (v3.5.1)) are supported. **Fig. 4** illustrates the Signaling Gateway (SGW) 40 with its components and interfaces. The signaling Gateway comprises a signaling Gateway Control Engine 401, which is connected to a WebRTC Client Signaling Handler 402 via a line 403, to a HTTP Handler 404 via line 405, to a SIP Handler 406 via line 407 and a RTSP Handler 408 via line 409. It implements the following typical Generic IPTV Capabilities utilizing several communication protocols:
- service discovery (SIP),
- service selection (HTTP),
- service control (SIP),
- service interaction (SIP) and
- media control (RTSP).

This gateway function converts signaling control messages coming from the WebRTC client side to the core IMS network side and vice versa.

The Signaling Gateway Control Engine 401 is responsible for the control of the different signaling protocol handlers and assigns the signaling messages to the adequate signaling protocol handler.

The Signaling Gateway Control Engine 401 provides connections to all Signaling Protocol Handlers incorporated in the Signaling Gateway 40. Each of the Signaling Protocol Handlers encompasses the following functions:
- Sending and receiving of signaling protocol messages,
- Signaling protocol message building,
- Validation of the signaling protocol conformance.

Furthermore, the WebRTC Client Signaling Handler 402 is responsible for maintaining of the signaling connection between the Signaling Gateway and the WebRTC Client's Web Application via W2 interface.

Furthermore, the HTTP Handler 404 is responsible for the signaling connection between the Signaling Gateway 40 and the Service Selection Function 13 via the Xa interface.

Furthermore, the SIP Handler 406 is responsible for the signaling connection between the Signaling Gateway 40 and the Core IMS 11 via the Gm interface.

Furthermore, the RTSP Handler 408 is responsible for the signaling connection between the Signaling Gateway40 and the MCF 16 via the Xc interface.

**Fig. 5** explains the extended functionality of the MDF 50 and MCF 16 to provide media delivery to WebRTC enabled client from standardized IMS based IPTV core IMS network. The MCF 16 usually receives information about sessions from the SCF 14, finds and chooses the right MDF 50 for media delivery and sends a response back to the user. The choice of the right MDF 50 is based on codec information or geographical location. Information about the used protocol for media delivery is also part of the selection. Then the MCF 16 transmits session information to the selected MDF 50. The Xp interface between the MCF 16 and the MDF 50 is extended in the range of functions, respectively the extension of the MDF.

The current invention proposes to include the following information in the session information:
- the resource identifier of the media file to be streamed,
- the DTLS certificate fingerprint,
- the generated ICE candidates of the WebRTC client
- and additional specific connection information for establishing a transport channel.

The invention proposes three main components to be included in the MDF 50:
- MDF Control engine 501. This engine dispatches the signaling from the MCF 16 towards the internal MDF functions and vice versa via Xp.
- Streaming engine 502: The streaming engine provides the streaming server 5021 and the DTLS/SRTP support 5022 via Xd'. The streaming server 5021 is responsible for the codec handling. It includes the audio and video codecs, which are also supported by the WebRTC client. The streaming engine 5021 is also responsible to set-up the secure transport channel with the WebRTC client via Xd'. Therefore the MDF 50 is extended to support the SRTP 5022 to establish a secure channel. The SRTP keys can be obtained through the DTLS key exchange. To verify the correctness of the keys the DTLS fingerprints are included in the message to the WebRTC client via Xd'.
- ICE Agent 503: The ICE agent 503 supports the ICE methods of WebRTC regarding the SDP Offer/Answer negotiation and procedures for doing connectivity checks. It also implements a STUN server 5031 functionality to support the STUN keep-alive usage as defined in the IETF RFC for Session Traversal Utilities for NAT (STUN) via e*. This is used by the WebRTC client to preserve the NAT bindings.

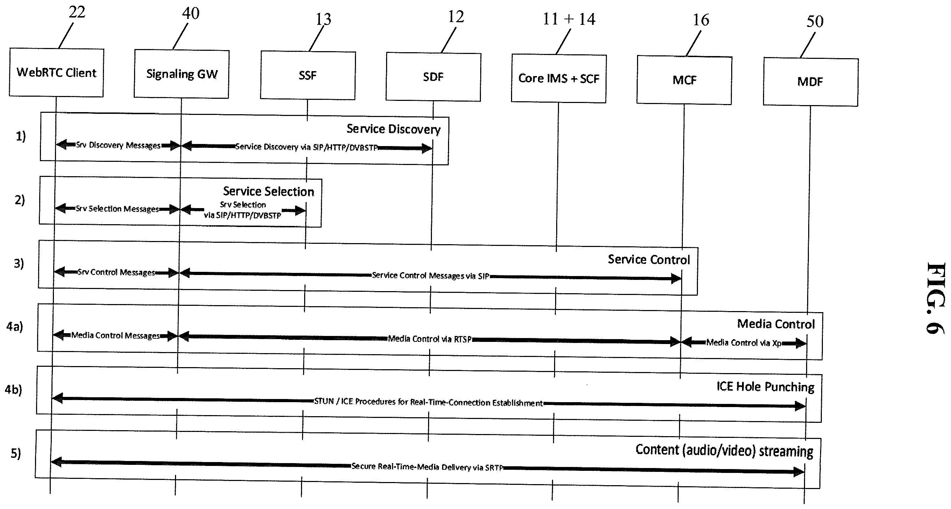

**Fig. 6** shows an example use case how a WebRTC Client is able to use the audio/video on demand functionality. For this use case, some assumptions have to be made:
- The client is already attached, authorized and authenticated to an access network.
- The WebRTC Client application is downloaded.
- The user has been successfully registered via the WebRTC Signaling Gateway.
- The termination of the session is out of scope in this example.

The use case can be described with the following sequences related to Fig. 6:
- Sequence 1) depicts the service discovery whereas the WebRTC Client 22 maps the service discovery messages into feasible messages to the Signaling Gateway 40 via W2 and vice versa and whereas the Signaling Gateway 40 maps the service discovery messages into a feasible messages to the SDF 12 via Gm and ISC and vice versa, as specified in ETSI specification TS 183063 (v3.5.5).
- Sequence 2) depicts the service selection whereas the WebRTC Client 22 maps the service selection messages into feasible messages to the Signaling Gateway 40 via W2 and vice versa and whereas the Signaling Gateway 40 maps the service selection messages into feasible messages to the SSF 13 and via Xa vice versa, as specified in ETSI specification TS 183063 (v3.5.5).
- Sequence 3) depicts the service control whereas the WebRTC Client 22 maps the service control messages into feasible messages to the Signaling Gateway 40 via W2 and vice versa and whereas the Signaling Gateway 40 maps the service control messages into feasible messages to the MCF 16 via Gm and y2 and vice versa, as specified in ETSI specification TS 183063 (v3.5.5).
- Sequence 4a) depicts the media control whereas the WebRTC Client 22 maps the media control messages into feasible messages to the Signaling Gateway 40 via W2 and vice versa and whereas the Signaling Gateway 40 maps the media control messages into feasible messages to the MCF 16 via Xc and vice versa, as specified in ETSI specification TS 183063 (v3.5.5). Sequence 4a) further depicts the media control whereas the MCF 16 maps the media control messages into feasible messages to the MDF 50 via Xp and vice versa. The concurrent running sequence 4b) depicts the ICE/STUN procedures to establish a real-time path between the WebRTC Client 22 and the MDF 50 via e*.
- Sequence 5) depicts the secured real-time streaming of audio/video between the WebRTC Client 22 and the MDF 50 via Xd'.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system for enabling a Web Real Time Communication, WebRTC, enabled client (22) to connect to an IP Multimedia Subsystem, IMS, based IP Television, IPTV, subsystem, the IMS based IPTV subsystem having an IMS core (11) enhanced by IPTV functions, the system comprising:
a signaling gateway, SGW (40) adapted to exchange signaling information between the WebRTC enabled client, and the IMS based IPTV subsystem;
a Media Delivery Function, MDF, module (50) adapted to contain media data and transmitting IPTV content to the WebRTC enabled client over a secure channel; and
an interface (e*) located between the WebRTC enabled client (22) and the MDF module (50) adapted to bypass Network Address Translation, NAT, restrictions,
wherein the MDF module (50) terminates the e* interface with the WebRTC enabled client at a STUN server (5031) included in an Interactive Connectivity Establishment, ICE, agent (503) in the MDF module (50) and the MDF module (50) comprises a streaming engine (502) adapted to support codec handling, including WebRTC client supported codecs and adapted to support secure transport of the IPTV media.

2. The system according to claim 1, wherein both functionalities SGW (40) and MDF module (50) are provided by a single device.

3. The system according to claim 1 or 2, wherein the IMS core (11) of the IMS based IPTV subsystem includes core network components, the IMS based IPTV subsystem further comprising:
a Service Selection Function, SSF (13), providing Service Selection Information, SSI, containing metadata of available content;
a Service Discovery Function, SDF (12), providing Service Attachment Information, SAI, with information about available services and related SSF;
a Media Control Function, MCF (16), controlling media transport of the MDF and receives instructions of SCF and the client; and
a Service Control Function, SCF (14), being a Service Information Protocol, SIP, Application Server, AS, the reference point for the client to start and control the IPTV sessions, and assigns the corresponding MCF (16) and forwards the session information to it.

4. The system according to any one of claims 1 to 3, wherein the Signaling Gateway (40) comprises:
a Signaling Gateway Control Engine (401) for controlling different signaling protocol handlers and assigning signaling messages to the adequate signaling protocol handler;
a WebRTC Client Signaling Handler (402) for maintaining a signaling connection between the Signaling Gateway (40) and the WebRTC client (22);
a HTTP Handler (404) for signaling connection between the Signaling Gateway (40) and the Service Selection Function (13);
a SIP Handler (406) for signaling connection between the Signaling Gateway (40) and the IMS Core (11); and
a RTSP Handler (408) for signaling connection between the Signaling Gateway (40) and the MCF (Xc).

5. The system according to any one of claims 1 to 4, wherein the Media Delivery Function module (50) comprises
a MDF control engine (501) for dispatching signaling from the MCF (16) towards the internal MDF functions and vice versa;
the Streaming engine (502) for providing a streaming server (5021) and a DTLS/SRTP support (5022); and
the Interactive Connectivity Establishment, ICE, Agent (503) supporting ICE methods.

6. The system according to any one of claims 1 to 5, wherein a WebRTC enabled browser is used as client device.

7. The system according to any one of claims 1 to 5, wherein a WebRTC App browser is used as client device.

8. A method for enabling a Web Real Time Communication, WebRTC, enabled client (22) to connect to an IP Multimedia Subsystem, IMS, based IP Television, IPTV, subsystem, the IMS based IPTV subsystem having an IMS core (11) enhanced by IPTV functions, using the system of any one of claims 1 to 7, the method comprising the steps of:
exchanging signaling information between the WebRTC enabled client (22), and the IMS based IPTV subsystem via a Signaling Gateway, SGW (40); and
transmitting IPTV content to the WebRTC enabled client (22) over a secure channel using a Media Delivery Function, MDF, module (50) containing media data, wherein the MDF module (50) is terminating the e* interface with the WebRTC enabled client at the STUN server (5031) included in the ICE agent (503) in the MDF module (50) adapted to bypass Network Address Translation, NAT, restrictions and wherein the streaming engine (502) comprised in the MDF module (50) is handling codecs, including WebRTC client supported codecs and providing secure transport of the IPTV media to the WebRTC enabled client (22).

## Patentansprüche

1. System zum Ermöglichen, dass ein zur Web-Echtzeitkommunikation, WebRTC, fähiger Client (22) sich mit einem auf einem IP-Multimedia-Subsystem, IMS, basierten IP-Femseh-, IPTV, Subsystem verbindet, wobei das IMS-basierte IPTV-Subsystem einen IMS-Kern (11) aufweist, der durch IPTV-Funktionen erweitert ist, wobei das System aufweist:
ein Signalisierungs-Gateway, SGW (40), das eingerichtet ist, Signalisierungsinformationen zwischen dem WebRTC-fähigen Client und dem IMS-basierten IPTV-Subsystem auszutauschen;
ein Medienauslieferungsfunktions-, MDF, Modul (50), das eingerichtet ist, Mediendaten zu enthalten und IPTV-Inhalte an den WebRTC-fähigen Client über einen sicheren Kanal zu übertragen; und
eine Schnittstelle (e*), die sich zwischen dem WebRTC-fähigen Client (22) und dem MDF-Modul (50) befindet, die eingerichtet ist, Netzwerkadressübersetzungs-, NAT, Einschränkungen zu umgehen,
wobei das MDF-Modul (50) die e*-Schnittstelle mit dem WebRTC-fähigen Client an einem STUN-Server (5031) abschließt, der in einem interaktiven Konnektivitätsherstellungs-, ICE, Agenten (503) im MDF-Modul (50) enthalten ist, und das MDF-Modul (50) eine Streaming-Maschine (502) aufweist, die eingerichtet ist, die Codec-Handhabung zu unterstützen, die vom WebRTC-Client unterstützte Codecs aufweist und eingerichtet ist, einen sicheren Transport der IPTV-Medien zu unterstützen.

2. System nach Anspruch 1, wobei beide Funktionalitäten SGW (40) und MDF-Modul (50) durch eine einzige Vorrichtung bereitgestellt werden.

3. System nach Anspruch 1 oder 2, wobei der IMS-Kern (11) des IMS-basierten IPTV-Subsystems Kernnetzwerkkomponenten aufweist, wobei das IMS-basierte IPTV-Subsystem ferner aufweist:
eine Dienstauswahlfunktion, SSF (13), die Dienstauswahlinformationen, SSI, bereitstellt, die Metadaten des verfügbaren Inhalts enthalten;
eine Dienstentdeckungsfunktion, SDF (12), die Dienstanhangsinformationen, SAI, mit Informationen über verfügbare Dienste und die zusammenhängende SSF bereitstellt;
eine Mediensteuerfunktion, MCF (16), die den Medientransport des MDF steuert und Anweisungen einer SCF und des Client empfängt; und
eine Dienststeuerfunktion, SCF (14), die ein Dienstinformationsprotokoll-, SIP, Anwendungsserver, AS, der Bezugspunkt für den Client ist, um die IPTV-Sitzungen zu beginnen und zu steuern, und die entsprechende MCF (16) zuzuordnen und die Sitzungsinformationen zu ihr weiterzuleiten.

4. System nach einem der Ansprüche 1 bis 3, wobei das Signalisierungs-Gateway (40) aufweist:
eine Signalisierungs-Gateway-Steuermaschine (401) zum Steuern unterschiedlicher Signalisierungsprotokoll-Behandlungsroutinen und Zuweisen von Signalisierungsnachrichten zur adäquaten Signalisierungsprotokoll-Behandlungsroutine;
eine WebRTC-Client-Signalisierungsbehandlungsroutine (402) zum Aufrechterhalten einer Signalisierungsverbindung zwischen dem Signalisierungs-Gateway (40) und dem WebRTC-Client (22);
eine HTTP-Behandlungsroutine (404) zur Signalisierungsverbindung zwischen dem Signalisierungs-Gateway (40) und der Dienstauswahlfunktion (13);
eine SIP-Behandlungsroutine (406) zur Signalisierungsverbindung zwischen dem Signalisierungs-Gateway (40) und dem IMS-Kern (11); und
eine RTSP-Behandlungsroutine (408) zur Signalisierungsverbindung zwischen dem Signalisierungs-Gateway (40) und der MCF (Xc).

5. System nach einem der Ansprüche 1 bis 4, wobei das Medienauslieferungsfunktionsmodul (50) aufweist:
eine MDF-Steuermaschine (501) zum Versenden der Signalisierung von der MCF (16) zu den internen MDF-Funktionen und umgekehrt;
die Streaming-Maschine (502) zum Bereitstellen eines Streaming-Servers (5021) und einer DTLS/SRTP-Unterstützung (5022); und
den interaktiven Konnektivitätsherstellungs-, ICE, Agenten (503), der die ICE-Verfahren unterstützt.

6. System nach einem der Ansprüche 1 bis 5, wobei ein WebRTC-fähiger Browser als Clientvorrichtung verwendet wird.

7. System nach einem der Ansprüche 1 bis 5, wobei ein WebRTC-App-Browser als Clientvorrichtung verwendet wird.

8. Verfahren zum Ermöglichen, dass ein zur Web-Echtzeitkommunikation, WebRTC, fähiger Client (22) sich mit einem auf einem IP-Multimedia-Subsystem, IMS, basierten IP-Femseh-, IPTV, Subsystem verbindet, wobei das IMS-basierte IPTV-Subsystem einen IMS-Kern (11) aufweist, der durch IPTV-Funktionen erweitert ist, wobei das System nach einem der Ansprüche 1 bis 7 verwendet wird, wobei das Verfahren die Schritte aufweist:
Austauschen von Signalisierungsinformationen zwischen dem WebRTC-fähigen Client (22), und dem IMS-basierten IPTV-Subsystem über ein ein Signalisierungs-Gateway, SGW (40); und
Übertragen von IPTV-Inhalten an den WebRTC-fähigen Client (22) über einen sicheren Kanal mittels eines Medienauslieferungsfunktions-, MDF, Moduls (50), das Mediendaten enthält, wobei das MDF-Modul (50) die e*-Schnittstelle mit dem WebRTC-fähigen Client am STUN-Server (5031) abschließt, der im ICE Agenten (503) im MDF-Modul (50) enthalten ist, das eingerichtet ist, Netzwerkadressübersetzungs-, NAT, Einschränkungen zu umgehen und wobei die im MDF-Modul (50) enthaltene Streaming-Maschine (502) Codecs, einschließlich vom WebRTC-Client unterstützte Codecs handhabt und einen sicheren Transport der IPTV-Medien zum WebRTC-fähigen Client (22) bereitstellt.

## Revendications

1. Système permettant à un client (22) à fonction de communication Web en temps réel WebRTC de se connecter à un sous-système de télévision IP IPTV basé sur un sous-système multimédia IP IMS, ledit sous-système IPTV basé sur IMS ayant un cœur IMS (11) amélioré par des fonctions IPTV, ledit système comprenant :
une passerelle de signalisation SGW (40) prévue pour échanger des informations de signalisation entre le client à fonction WebRTC et le sous-système IPTV basé sur IMS ;
un module à fonction de distribution multimédia MDF (50) prévu pour contenir des données multimédia et transmettant un contenu IPTV au client à fonction WebRTC via un canal sécurisé ; et
une interface (e*) présentée entre le client à fonction WebRTC (22) et le module MDF (50), prévue pour contourner des restrictions de traduction d'adresse réseau NAT, le module MDF (50) terminant l'interface e* avec le client à fonction WebRTC sur un serveur STUN (5031) compris dans un agent d'établissement de connectivité interactif ICE (503) dans le module MDF (50), et le module MDF (50) comprenant un moteur de diffusion en continu (502) prévu pour assister une gestion de codecs, comprenant des codecs assistés client WebRTC, et prévu pour assister un transport sécurisé des contenus multimédia IPTV.

2. Système selon la revendication 1, où les deux fonctionnalités SGW (40) et module MDF (50) sont assurées par un seul dispositif.

3. Système selon la revendication 1 ou la revendication 2, où the cœur IMS (11) du sous-système IPTV basé sur IMS comprend des composants de cœur de réseau, le sous-système IPTV basé sur IMS comprenant en outre :
une fonction de sélection de service SSF (13) délivrant des informations de sélection de service SSI contenant une métadonnée de contenu disponible ;
une fonction de découverte de service SDF (12) délivrant des informations de rattacheciée ;
une fonction de commande multimédia MCF (16), commandant le transport multimédia du MDF et recevant des instructions de la SCF et du client ; et
une fonction de commande de service Control SCF (14), étant un serveur d'application AS de protocole d'informations de service SIP, le point de référence pour le client afin de lancer et commander les sessions IPTV, et attribuant la MCF (16) correspondante et transmettant les informations de session à celui-ci.

4. Système selon l'une des revendications 1 à 3, où la passerelle de signalisation (40) comprend:
un moteur de commande de passerelle de signalisation (401) destiné à commander différents gestionnaires de protocole de signalisation et attribuant des messages de signalisation au gestionnaire de protocole de signalisation adéquat ;
un gestionnaire de signalisation de client WebRTC (402) destiné à maintenir une connexion de signalisation entre la passerelle de signalisation (40) et le client WebRTC (22) ;
un gestionnaire HTTP (404) destiné à signaler une connexion entre la passerelle de signalisation (40) et la fonction de sélection de service (13) ;
un gestionnaire SIP (406) destiné à signaler une connexion entre la passerelle de signalisation (40) et le cœur IMS (11) ; et
un gestionnaire RTSP (408) destiné à signaler une connexion entre la passerelle de signalisation (40) et la MCF (Xc).

5. Système selon l'une des revendications 1 à 4, où le module à fonction de distribution multimédia (50) comprend
un moteur de commande MDF (501) destiné à transmettre la signalisation de la MCF (16) vers les fonctions MDF internes et réciproquement ;
le moteur de diffusion en continu (502) pour fournir un serveur de diffusion en continu (5021) et un support DTLS/SRTP (5022) ; et
l'agent d'établissement de connectivité interactif ICE (503) assistant des procédés ICE.

6. Système selon l'une des revendications 1 à 5, où un navigateur à fonction WebRTC est utilisé comme dispositif client.

7. Système selon l'une des revendications 1 à 5, où un navigateur d'application WebRTC est utilisé comme dispositif client.

8. Procédé permettant à un client (22) à fonction de communication Web en temps réel WebRTC de se connecter à un sous-système de télévision IP IPTV basé sur un sous-système multimédia IP IMS, ledit sous-système IPTV basé sur IMS ayant un coeur IMS (11) amélioré par des fonctions IPTV, au moyen du système selon l'une des revendications 1 à 7, ledit procédé comprenant les étapes suivantes :
échange d'informations de signalisation entre le client à fonction WebRTC (22) et le sous-système IPTV basé sur IMS via une passerelle de signalisation SGW (40) ; et
transmission d'un contenu IPTV au client à fonction WebRTC (22) via un canal sécurisé au moyen d'un module à fonction de distribution multimédia MDF (50) contenant des données multimédia, ledit module MDF (50) terminant l'interface e* avec le client à fonction WebRTC sur le serveur STUN (5031) compris dans l'agent ICE (503) dans le module MDF (50) prévue pour contourner des restrictions de traduction d'adresse réseau NAT, et où le moteur de diffusion en continu (502) compris dans le module MDF (50) gère des codecs, comprenant des codecs assistés client WebRTC, et assure un assister un transport sécurisé des contenus multimédia IPTV vers le client à fonction WebRTC (22).
